# EUROPEAN PATENT APPLICATION

(11) **EP 2 654 144 A2**
(43) Date of publication of application: **23.10.2013**
(21) Application number: 11848092.0
(22) Date of filing: 16.11.2011
(51) Int. Cl.: H01T 4/08, H02H 9/02, H01R 4/66

(54) **SMART BONDING METHOD FOR EQUIPMENT INCLUDING A REMOTE CONTROL PANEL AND A CONTROL PANEL HAVING A METAL CASE FOR UNDERGROUND WELLS**

(30) Priority: 13.12.2010 KR 20100126683; 13.12.2010 KR 20100126685; 13.12.2010 KR 20100126684; 13.12.2010 KR 20100126686
(71) Applicant: Kim, Seonho, Daejeon 301-816 (KR); Surgelab Korea, Inc., Daejeon 306-813 (KR)
(72) Inventor: KIM, Seonho, Daejeon 301-816 (KR)
(74) Representative: Gille Hrabal
(86) International application number: PCT/KR2011/008747
(87) International publication number: WO 2012/081840

(57) **Abstract**

The present invention relates to a smart bonding method. In the smart bonding method for equipment in which a power source and a communication line are connected to each other, a surge protector for the power source is connected to the power source line, and a surge protector for communication is connected to the communication line. Also, the ground terminals of the surge protector for the power source and of the surge protector for communication are connected to each other to form a common ground terminal. Here, the common ground terminal is connected to the conductive frame of the equipment. As described above, the potential difference between all lines of the equipment is equal to the potential of the ground through the surge protectors. Thus, a surge current may be interrupted to fundamentally prevent damage due to a lightning surge from occurring.

## Description

### Technical Field

The present invention relates to a smart ground bonding method for facilities. More particularly, the present invention relates to a technology in that an equipotential between both facilities is implemented, when a surge current is generated through a line for connecting between the facilities separated from each other, thereby preventing a damage of the facility due to a lightning surge generated in one facility and grounding terminals of a power supply surge protection device and a communication surge protection device of the facility are connected to a metal box or a common ground terminal, so that the potential difference between all lines of the equipment is equal to the potential of the ground through the surge protectors, thereby a surge current may be interrupted to fundamentally prevent damage due to a lightning surge from occurring.

### Background Art

Various plant facilities are installed on a mesh ground, in which case it is theoretically preferable to install all facilities on one mesh ground. This is because a potential difference is not generated between the facilities even when power lines and communication lines are connected between the facilities while not being influenced by a lightning surge greatly.

However, it is general to install various facilities on mesh grounds respectively in reality. In this case, since a ground resistance is basically much higher than resistances of lines such as power lines and communication lines when the lines are connected between the facilities, if a potential difference is generated between grounds, a high ground potential fails to produce an equipotential but flows reversely due to a low line resistance and the reverse current incurs damage while a lightning current flows to a remote ground through a line via a device.

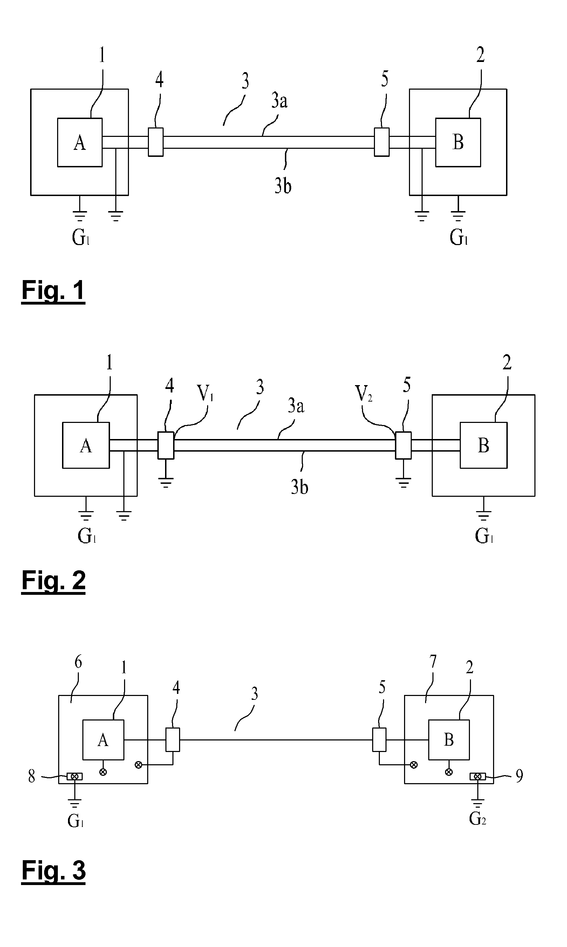

Thus, as illustrated in FIG. 1, in order to prevent damage due to a lightning surge, a surge protection device 4 is installed on a wire connected between facilities 1 and 2, in which case a core 3a of the wire 3 is connected to terminals of the facilities 1 and 2 and opposite ends of a shield line 3b are connected to a ground by using the shield line 3b as a ground wire.

However, in an aspect of a surge impedance of the wire, assuming that a surge frequency is 1 MHz, L=1.64 µH/m at a surge impedance (xL = 2nfL) having a ground wire of 1m, a surge impedance is 10.08Ω/m. Meanwhile, if a length of the ground wire is 1 Km, since a surge impedance is approximately 10 KΩ which is very high, an effect of the ground wire becomes weak. Accordingly, if a potential difference is generated between points of a facility A and a facility B, a device breaks down in a process of flowing a surge current from an earth ground having a high potential to an earth ground having a low potential.

Recently, it is general that a gas pipe, an oil pipeline, a telecommunication line and water supply, a drainage pipe, and a high pressure transmission pipe etc. are laid under the underground with the object of the improvement of an urban environment, the application of the available space, and the protection of all kinds of the pipes etc.

In connection with the pipe which is laid under this underground, the remote monitoring and remote control system are operated for the water intake, the water purifying, the pressurization, the pressure conditioning, the motor-operated valve control, the flow control, and the pressure monitoring and control.

This remote monitoring and remote control system is operated by a control panel, which is remotely installed in the metal pipe laid under the underground. FIG. 1 illustrates the connection relation between the control panel and the metal pipe.

As shown, a sensor and a controller 110 for detecting a fluid passing through the metal pipe 1100, transmitting the detecting signal to the control panel 400, and controlling the fluid flux of the metal pipe 1100 according to the control signal of the control panel 400 is formed at an inner side of the metal pipe 1100, which is laid under the underground. Also, the sensor and controller 110 is connected to the control circuit 420 of the control panel 400 through the sensor line, so that the detected sensng signal is tranmitted to the control panel 400.

In the structure of the control panel 400, the metal panel 410 is installed inside a metal box. The control panel 400 includes the control circuit 420 for performing the operation of the water intake, the water purifying, the pressurization, the pressure conditioning, the motor-operated valve control, the flow control, and the pressure monitoring and control etc. Also, the power line, the communications line, the signal line, the sensor line etc. entered from the outside are connected to the control circuit 120.

The control panel 400 is exposed to the danger about the generation of the surge like the conventional electronic devices. In order to prevent the damage of the device owing to the generation of the surge, a surge protector for a power 430, a communications surge protector 440, a surge protector 450 for a signal, and a surge protector 460 for a sensor are installed between each line and the control circuit 420. Also, each surge protector 430 ∼ 460 and the ground terminal of the control circuit 42 are bonded to a ground terminal box 480, which is connected to the earth through the ground wire 470, thereby utilizing the equipotential bonding manner in such a manner that an equipotential between each line and the device is implemented.

According to this equipotential manner, the generation of the electric potential difference between the control circuit and the line or between the lines is prevented, so that the inflow of the surge current can be blocked.

However, since the specific resistance rate of the ground is about 600Ω / m³, the earth potential difference is generated according to the distance between the earth of the control panel 400 and the metal pipe 1100, This is a natural phenomenon by a cloud. Accordingly, if the electric potential difference between the metal pipe 1100 and the ground is generated, the malfunction of the control circuit 420 occurs owing to the surge current.

Also, as shown in FIG. 1, although the surge protector is formed at each line, the electric potential difference between the metal pipe and the ground is generated. Moreover, where the ground line becomes longer, since the skin effect of the reactance thereof becomes bigger, there is a problem in that the device is damaged owing to a difficulty of the perfect equipotential.

For example, where the commercial power of a normal 60Hz is applied thereto, the reactance of the ground wire 470 is about hundreds of µm, which is a negligible level owing to a low value thereof. However, where the surge current of 1MHz is flowed, the reactance of the ground wire 1m is 2 π fL = 6.28 ×10⁶× 1.62 × 10⁻⁶As the = 10.08 Ω, which is considerably high value. Accordingly, the electric potential difference is generated between each surge protector due to the reactance component of the ground wire 470 during the generation of the surge, thereby lowering the effect of the equipotential bonding.

### Disclosure

### Technical Problem

Accordingly, the present invention has been made to solve the above-mentioned problems occurring in the prior art, and an object of the present invention is to provide a technology of substantially realizing an equipotential between two facilities when a surge current is generated through a wire connecting the facilities spaced apart from each other, preventing one of the facilities from being damaged by a lightning surge generated in the other facility.

Another object of the present invention is to provide a technology of connecting a power supply surge protection device and a communication surge protection device to a common ground terminal to form potential differences between all wires of facilities such that they correspond to an equipotential to the ground, blocking a surge current passing through the facilities basically preventing damage due to a lightning surge.

Further another object of the present invention is to provide a technology of connecting a metal structure in a facility to a common ground terminal or utilizing it as a common ground terminal, forming an equipotential with reference to an introduction part of the facility and blocking a surge current passing through a plant facility.

Further another object of the present invention is to provide a smart ground bonding method in that a surge protector for a bonding is interposed between a security ground and a communication ground, so that a equipotential between the lines is maintained, although the ground line becomes longer, thereby preventing a damage owing to a lightning surge.

Further another object of the present invention is to provide a smart ground bonding method in that a metal grouting pipe of an underground well is utilized as a ground of a box of a control panel, so that the electric potential difference between the grounds can be fundamentally prevented, thereby preventing a damage of the device owing to the surge current in advance.

Further another object of the present invention is to provide a smart ground bonding method in that a ground wire for connecting each surge protector with ground terminal box is replaced with a metal panel provided in the control panel, so that the reactance component and the skin effect can be remarkably reduced, thereby redoubling the equipotential bonding effect between the surge protectors.

Further another object of the present invention is to provide a smart ground bonding method in that the ground of the control panel and the ground of the metal pipe, which is a monitoring and controlling object, are unified, so that the electric potential difference between the grounds can be fundamentally prevented, thereby preventing a damage of the device owing to the surge current in advance.

Further another object of the present invention is to provide a smart ground bonding method in that a ground wire for connecting each surge protector with ground terminal box in the control panel is replaced with a metal panel provided in the control panel, so that the reactance component and the skin effect can be remarkably reduced, thereby redoubling the equipotential bonding effect between the surge protectors.

Further another object of the present invention is to provide a smart ground bonding method in that it remarkably reduces the grounding construction cost and the ground management expense.

### Technical solution

In order to accomplish this object, there is provided a smart ground bonding method for facilities, wherein an electric wire is connected between a first facility and a second facility, a first surge protection device is connected between the first facility and the electric wire, a second surge protection device is connected between the electric wire and the second facility, and wherein ground terminals of the first and second surge protection devices are connected to the ground, so that a ground wire for connecting between the grounds of each facility is replaced by means of the combination of the first surge protection device, the electric line, and the second with a metal panel provided in the control panel, surge protection device.

In accordance with another aspect of the present invention, there is provided a smart ground bonding method for a facility to which a power supply line and a communication line are connected, wherein a power supply surge protection device is connected to the power supply line, a communication surge protection device is connected to the communication line, ground terminals of the power supply surge protection device and the communication surge protection device are connected to each other to form a common ground terminal, and the common ground terminal is connected to a conductive frame of the facility.

In accordance with further another aspect of the present invention, there is provided a smart ground bonding method for a facility to which a metal structure is provided and a power supply line and a communication line are connected, wherein a power supply surge protection device is connected to the power supply line, a communication surge protection device is connected to the communication line, a common ground is formed on the metal structure, and grounding terminals of the power supply surge protection device and the communication surge protection device are connected to the common ground.

In accordance with further another aspect of the present invention, there is provided a smart ground bonding method for a facility to which a security ground and a communication ground are provided and a power supply line and a communication line are connected, wherein a power supply surge protection device is connected to the power supply line, a ground terminal of the power supply surge protection device is connected to the security ground, a communication surge protection device is connected to the communication line, a ground terminal of the communication surge protection device is connected to the communication ground, and a surge protection device for bonding is connected between the security ground and the communication ground.

In accordance with further another aspect of the present invention, there is provided a smart ground bonding method for a control panel for remotely monitoring and controlling a metal pipe line, wherein a metal pipe for ground and a ground terminal box of the control panel remotely connected thereto are bonded and connected to each other by using a ground wire.

Here, a ground terminal of an electric device installed a metal pipe is bonded and connected to the metal pipe.

Also, a ground terminal of at least one surge protection device installed in the control panel is bonded to the adjacent metal panel.

Moreover, the metal panel is a metal panel, on which a control circuit is installed, and a ground terminal of the control circuit is bonded to the metal panel.

### Advantageous Effects

According to the invention, there is an effect in that the potential difference between all lines of the equipment is equal to the potential of the ground through the surge protectors, thereby a surge current may be interrupted to fundamentally prevent damage due to a lightning surge from occurring.

Also, there is another effect in that the electric potential difference between the grounds of the underground well and the control panel can be fundamentally prevented, thereby preventing the stroke of lightning and the surge damage of the underground well and the control panel in advance.

Moreover, there is further another effect in that each surge protectors is equipotential-bonded thereto by using the metal panel larger than the conducting wire in area, thereby redoubling the equipotential bonding effect between the surge protectors.

According to the invention, there is further another effect in that the equipotential bonding between each surge protector is implemented by using the metal box or the metal panel of the control panel, so that it certainly guarantee the equipotential between the device and the line and between the lines, thereby preventing the damage of the device owing to the inflow of the surge.

Also, there is further another effect in that the material cost can be diminished since the ground wire for connecting the control circuit and each surge protector with the ground terminal box is not required.

Moreover, According to the invention, there is further another effect in that the electric potential difference between the metal pipe and the ground can be fundamentally prevented, thereby preventing the stroke of lightning and the surge damage of the metal pipe line and the control panel in advance.

Furthermore, there is further another effect in that it remarkably reduces the grounding construction cost and the ground management expense, since the earth ground is not conducted.

### Brief Description of the Drawings

The above and other objects, features and advantages of the present invention will be more apparent from the following detailed description taken in conjunction with the accompanying drawings, in which:
FIG. 1 illustrates a conventional facility grounding structure;
FIG. 2 illustrates a facility grounding structure according to the first embodiment of the present invention;
FIG. 3 is a facility grounding structure according to the second embodiment of the present invention;
FIG. 4 illustrates a facility grounding structure according to the third embodiment of the present invention;
FIG. 5 illustrates a facility grounding structure according to the fourth embodiment of the present invention;
FIG. 6 illustrates a facility grounding structure according to the fifth embodiment of the present invention;
FIG. 7 illustrates a facility grounding structure according to the sixth embodiment of the present invention;
FIG. 8 illustrates a facility grounding structure according to the seventh embodiment of the present invention;
FIG. 9 is a sectional view a structure of a conventional underground well;
FIG. 10 illustrates an electrical connection between a control panel and an underground well;
FIG. 11 illustrates an equipotential bonding structure between a control panel and an underground well according to the present invention;
FIG. 12 illustrates an equipotential bonding structure of an inside of the conventional control panel;
FIG. 13 illustrates an equipotential bonding structure inside a control panel according to the present invention;
FIG. 14 illustrates an electrical connection between a metal pipe line and a control panel; and
FIG. 15 illustrates an equipotential bonding structure between a control panel and an underground well according to the present invention.

### Best Mode

### Mode for Invention

Hereinafter, an exemplary embodiment of the present invention will be described in detail with reference to the accompanying drawings.

FIG. 2 illustrates a facility grounding structure according to a first embodiment of the present invention.

As illustrated in FIG. 2, in the facility grounding structure according to the first embodiment of the present invention, an electric wire is connected between a first facility 1 and a second facility 2, a first surge protection device 4 is connected between the first facility 1 and the electric wire 3, a second surge protection device 5 is connected between the electric wire 3 and the second facility 2, and ground terminals of the first and second surge protection devices 4 and 5 are connected to the ground.

Here, since only one end of both ends of a shield line 3b is connected to a ground, it is characterized in that it prevents the surge current from being flowed from one side ground to another ground owing to the shield line 3b.

As illustrated in FIG. 2, where the distance between the facilities is long, that is, the electric wire 3 is long, if the surge protection devices 4 and 5 are operated, the electric wire 3 has about 300Ω per 1 Km based on 0.65mm in diameter, meanwhile the inner resistance of the surge protection devices 4 and 5 is 100Ω. Accordingly, when the current of 10A is flowed therein through the electric wire 3, V₁ and V₂ are 100mΩ × 10A = 1V and the electric power consumption of the surge protection devices 4 and 5 is 10W, meanwhile, V₁₂ between V₁ and V₂ is 300Ω × 10A = 3000V and the electric power consumption of the electric wire 3 is 30KW.

That is, when the surge protection devices 4 and 5 are electrically connected to the closed loop having a long wire, most of surge energy is consumed in the wire.

In point of the equipotential concept, since the potential differences between a ground potential G₁ and a potential V₁ and a ground potential G₂ and a potential V₂ are about 1V, from the facilities 1 and 2, the potential differences between the ground potential G₁ and the ground potential G₂ is 3,000V, meanwhile, the potential difference between the ground potential G₁ and the potential V₁ and the ground potential G₂ and the potential V₂ is equal to each other. Accordingly, as though the potential difference between the ground potentials is generated, there is no effect on the equipment.

Thus, the electric wire 3, which is connected between the facilities, is used for the communication wire. However, since the electric wire is combined with the surge protection devices, it is characterized in that the electric wire can be utilized as a grounding wire for connecting between the ground G₁ of the facility A (1) and the ground G₂ of the facility B (2).

FIG. 3 illustrates a facility grounding structure according to a second embodiment of the present invention.

As illustrated in FIG. 3, in the facility grounding structure according to the second embodiment of the present invention, the ground terminals of the first and second surge protection devices 4 and 5 are bonded to metal boxes 6 and 7 of the first and second facilities, and ground terminal boxs 8 and 9 connected to the ground are formed on sides of the metal boxes 6 and 7. Here, the surge protection devices 4 and 5 are bonded to portions in the metal boxes 6 and 7 of the facilities 1 and 2 closest to the surge protection devices 4 and 5.

In case of the second embodiment, ground wires are used to connect facilities 1 and 2, ground terminals of the surge protection devices 4 and 5, and ground terminal boxs, in which case reactance components for surge frequencies (20 KHz to 20 MHz) of the ground wires increase and skin effects due to small cross-sections of the ground wires are applied greatly, significantly lowering an equipotential bonding effect between the surge protection devices due to a voltage drop (i.e. generation of a potential difference) for a surge.

For example, when a common supply voltage of 60 Hz is applied to a ground wire, the reactance of the ground wire is several hundred micrometers, which is very low and can be neglected, and when a surge current of 1 MHz flows through the ground wire, the reactance of the ground wire of 1 m is 10. 08 Ω (2nfL = 6.28 × 10⁶ × 1.62 × 10⁻⁶), which is considerably high. Accordingly, a potential difference is generated between the surge protection devices due to the reactance component of the ground wire when a surge is generated, lowering an equipotential bonding effect.

To the contrary, according to the second embodiment of the present invention, since the ground terminals of the surge protection devices 4 and 5 are bonded to the metal box, the reactance between the facilities 1 and the surge protection devices 4 and 5 is remarkably reduced as compared with the conventional ground wire, making it possible to substantially form an equipotential when a surge is introduced. This is because since the bonding parts are not connected through a wire of a small cross-section but connected through a metal panel of a large area, a skin effect and accordingly the reactance are very low.

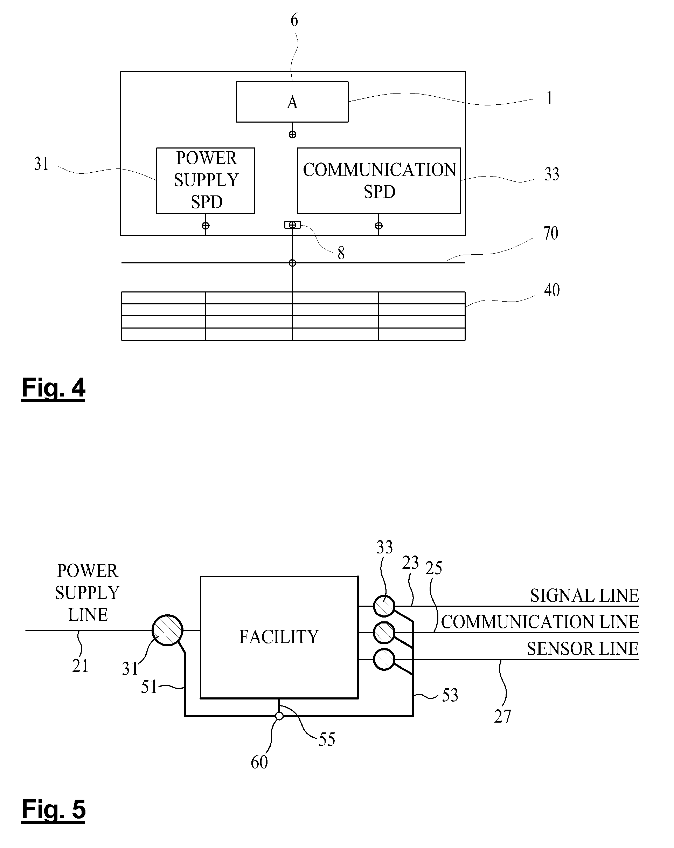

FIG. 4 is a facility grounding structure according to a third second embodiment of the present invention.

The third embodiment of the present invention corresponds to a structure where ground terminals of a power supply surge protection device 31 and a communication surge protection device 33 installed in one facility are bonded to closest portions of a metal box 6 and a ground terminal box 8 formed on one side of the metal box 6 is connected to a mesh ground 40 or is connected to a nearby metal structure when there is no ground or a defective ground.

Here, it is preferable that the metal structure contacts the earth or is located to face the earth, which is because the metal structure such as a metal pipe or a steel frame of a building is installed in the vicinity of the ground surface, acting as an excellent ground by itself.

Here, the metal structure includes a water pipe, a water main, a gas pipe, a hot water pipe, a water supply pipe, a water discharge pipe, a wire pipe, a frame, a frame of a machine, a frame of a building, a box of a facility, a grouting of an underground well, a casing, a lift head pipe, and a water supply pipe for a fire prevention system.

FIG. 5 illustrates a facility grounding structure according to a forth embodiment of the present invention.

As illustrated in FIG. 5, various lines such as a power supply line 21, a signal line 23, a communication line 25, and a sensor line 27 are connected to a facility of a plant, and a power supply surge protection device 31 is connected to the power supply line 21 and the facility, and a communication surge protection device 33 is connected to communication lines such as the signal line 23, the communication line 25, and the sensor line 27.

While the power supply surge protection device 31 and the communication surge protection device 33 are conventionally grounded to a mesh ground in a single grounding manner, the ground terminals of the power supply surge protection device 31 and the communication surge protection device 33 are connected to each other to form a common ground terminal 60 and the common ground terminal 60 is connected to a conductive frame (not shown) of the facility through the ground wire 55.

Accordingly, a potential difference between all the lines corresponds to an equipotential to the ground through the surge protection devices 31 and 33 and even an outer box (conductive frame) of a facility forms an equipotential, which prevents damage due to a lightning surge as a surge current passing through the plant facility disappears.

The embodiment of the present invention corresponds to a very effective structure when there is no ground or a defective ground, and is not relevant to the earth ground.

It is apparent that the common ground terminal 60 may be connected to the earth ground when there is an excellent earth ground.

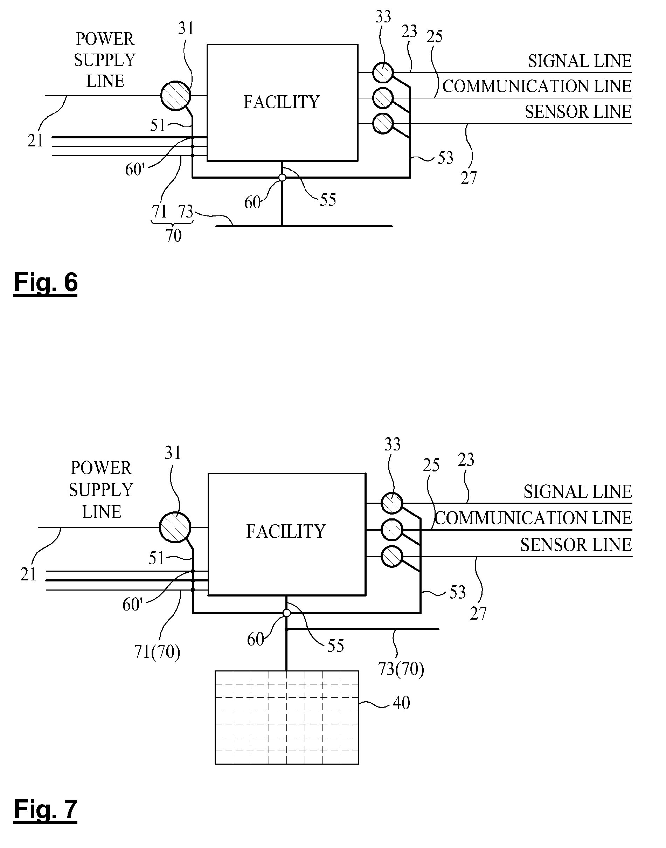

FIG. 6 illustrates a facility grounding structure according to a fifth embodiment of the present invention.

The fifth embodiment of the present invention also has a structure where various lines connected to a facility of a plant and a power supply surge protection device 31 and a communication surge protection device 33 are connected between a power supply line 21 and the facility and between the communication line and the facility.

The fifth embodiment of the present invention has a structure where a common ground terminal 60 is bonded to a metal structure 70 located in a facility, in addition to a structure where the power supply surge protection device 31 and the communication surge protection device 33 are connected to each other to form a common ground terminal 60 and the common ground terminal 60 is connected to a conductive frame (not shown) of a facility through a ground wire 55.

Here, the metal structure 70 includes a water pipe, a water main, a gas pipe, a hot water pipe, and a metal frame, and one of the ground wires 51 and 53 connected to the common ground terminal 60 is bonded to the metal structure 70. Since a metal pipe and a steel frame of a building are installed in the vicinity of the ground surface, they act as excellent grounds by themselves and are very effective when there is no ground or a defective ground.

In a modified embodiment of the present invention, the ground wires 51 and 53 may be bonded to the metal structure 70 to form a common ground terminal 60' and the ground terminals of the power supply surge protection device 31 and the communication surge protection device 33 may be connected to the common ground terminal 60'.

Accordingly, a potential difference between all the lines corresponds to an equipotential to the ground through the surge protection devices 31 and 33 and various pipes and the metal structure are used as ground bodies, showing a more excellent grounding performance.

According to the fifth embodiment of the present invention, since an equipotential is formed with reference to an introduction part of the facility, a surge current passing through the plant facility disappears, which prevents damage due to a lightning surge.

FIG. 7 illustrates a facility grounding structure according to a sixth embodiment of the present invention.

The sixth embodiment of the present invention also has the same structure where various lines are connected to a facility of a plant and a power supply surge protection device 31 and a communication surge protection device 33 are connected between a power supply line 21 and the facility and between a communication line and the facility.

The basis structure of the sixth embodiment of the present invention is the same as that of the fourth embodiment of the present invention, but is different in that a common ground terminal 60 is connected to a mesh ground 40.

Accordingly, a potential difference between all the lines corresponds to an equipotential to the ground through surge protection devices 31 and 33, and various pipes and a metal structure are bonded to a ground body, i.e. a mesh ground 40 to be utilized as a ground element together with the ground body.

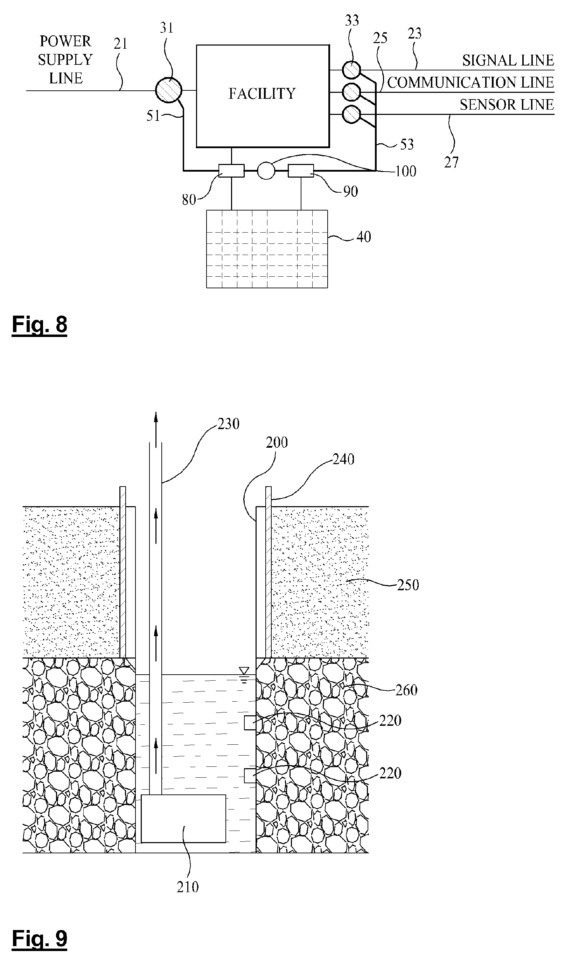

FIG. 8 illustrates a facility grounding structure according to a seventh embodiment of the present invention.

The seventh embodiment of the present invention also has a structure where various lines connected to a facility of a plant and a power supply surge protection device 31 and a communication surge protection device 33 are connected between a power supply line 21 and the facility and between the communication line and the facility.

In the seventh embodiment of the present invention, it is characterized in that the power supply surge protection device 31 is connected to a security ground 80, a ground terminal of the communication surge protection device 33 is connected to a communication ground 90, and a surge protection device for bonding 100 is connected between the security ground 80 and the communication ground 90.

The security ground 80 and the communication ground 90 are connected to a ground chain mesh ground 40.

Conventionally, the security ground 80 and the communication ground 90 are connected to the mesh ground 40 through a solo grounding method. Where a security ground wire and a communication ground wire, which are drawn from one mesh ground 40, are connected to the facility, since the ground line becomes longer, the resistance of the ground line becomes bigger, thereby the potential difference between each ground line is generated. Accordingly, there is a problem in that the surge current can be flowed into the plant facility owing to the lightning surge.

In the meantime, a common grounding method is utilized in the present invention. Accordingly, it is characterized in that the potential difference between the security ground 80 and the communication ground 90 is not generated by providing the surge protection device for bonding 100 near the facility.

Accordingly, since the potential difference between all the lines corresponds to the equipotential to the ground through the surge protection devices 31, 33 and 100 and the equipotential is formed with reference to an introduction part of the facility, the surge current passing through the plant facility disappears, which prevents damage due to the lightning surge.

Here, where the facility is adjacent to a terminal box, the surge protection device for bonding 100 can be installed in the inside of a security ground terminal box or a communication ground terminal box.

Although a preferred embodiment of the present invention has been described for illustrative purposes, those skilled in the art will appreciate that various modifications, additions and substitutions are possible, without departing from the scope and spirit of the invention as disclosed in the accompanying claims.

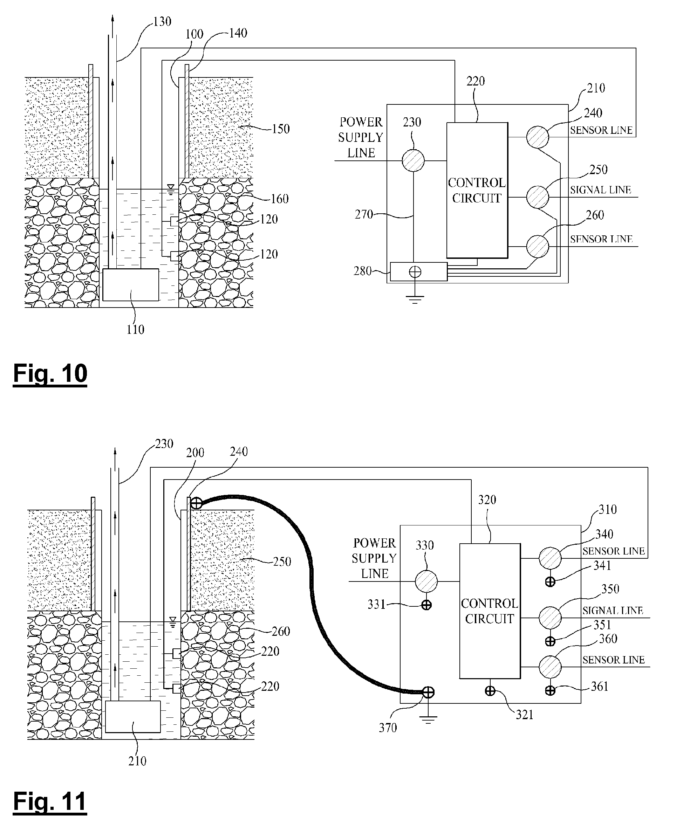

FIG. 11 illustrates an equipotential bonding structure between a control panel and an underground well according to the present invention. Since the construction of the control panel and the underground well according to the present invention is identical with the conventional art, further description on this is omitted here. Hereinafter, an equipotential bonding between an underground well and a control panel and an equipotential bonding will be described.

### 1. Equipotential Bonding Between Underground Well and Control panel

First, an equipotential bonding between an underground well and a control panel is performed by bonding a ground terminal box 370 of a control panel 111 and a metal grouting pipe 240 of the underground well using wires.

The metal grouting pipe 240 acts as an excellent ground body inserted into and installed in the earth and sand layer 250 and contacting the earth and sand layer 250, and is located at the same point as the underwater motor pump 210 so that there is no potential difference between the grouting pipe 240 and the underwater motor pump 210.

Thus, since when the ground terminal box 370 of the control panel 111 and the metal grouting pipe 240 of the underground well are bonded and connected to each other, the control panel 111 is grounded to the metal grouting pipe 240 and a potential difference is not generated between the ground terminal box 370 of the control panel 111 and the ground body of the underground well.

Here, it is preferable that the ground wire 380 connecting the ground terminal box 370 of the control panel 111 and the metal grouting pipe 240 of the underground well employs a thick wire and a distance between the ground terminal box 370 and the metal grouting pipe 240, so that the reactance of the ground wire 380 and accordingly the potential difference are minimized.

### 2. Equipotential bonding in Control panel

In the equipotential bonding structure in the control panel, the control circuit 320 installed in the control panel 111 including the metal body and the ground terminals of the surge protection devices 330 to 360 are bonded to the metal panel 310 to form the bonding parts 321, 331, 341, 351, and 361 on the metal panel 310, and the ground terminal box 370 is installed at one side of the metal panel 310.

Although it is illustrated in FIG. 11 that the ground terminals of the control circuit 320 and the surge protection devices 330 to 360 are bonded to one metal panel 310, it is apparent that bonding parts may be formed at the closest portion of the panels of the metal box of the control panel 111 and the metal panel.

When the control circuit 320 and the ground terminals of the surge protection devices 330 to 360 are bonded to the metal panel of the metal box, the reactance between the control circuit 320 and the surge protection devices 330 to 360 and between the surge protection devices 330 to 360 themselves is remarkably reduced as compared with the conventional ground wire, making it possible to substantially form an equipotential when a surge is introduced. This is because since the bonding parts are not connected through a wire of a small cross-section but connected through a metal panel with a large area, a skin effect and accordingly the reactance are very low.

As mentioned above, the ground wires 380 extracted from the ground bonding parts 70 may be bonded and connected to the metal grouting pipe 240 of the underground well installed in the vicinity and may be connected to the earth ground at the same time.

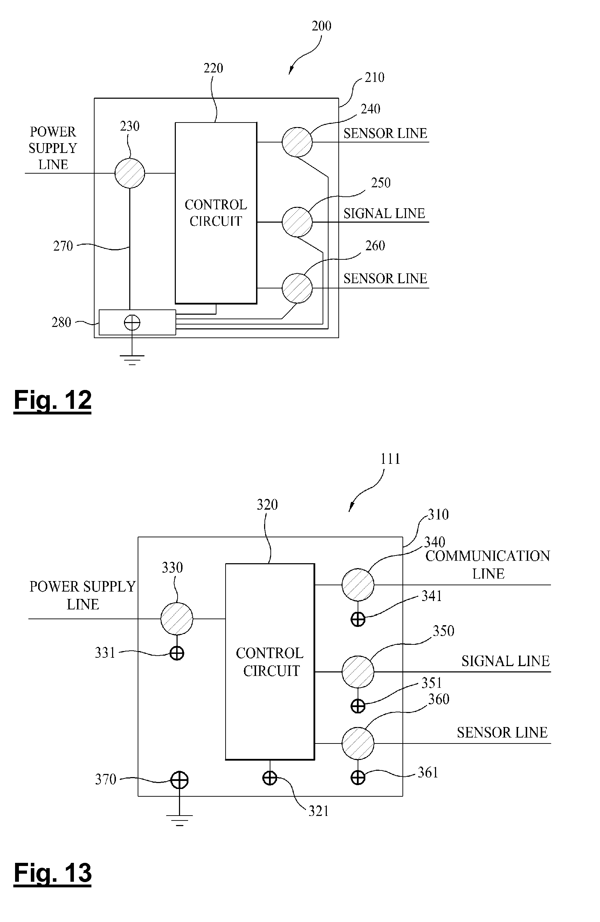

Hereinafter, an exemplary embodiment of the present invention will be described in detail with reference to FIG. 12 and FIG. 13.

FIG. 13 illustrates an equipotential bonding structure inside a control panel according to the present invention.

Referring to FIG. 13, the equipotential bonding structure in the control panel according the present invention includes a control circuit 320 installed in the control panel 111 having a metal box, a power supply surge protection device 330 installed between a power supply line and the control circuit 320, a communication surge protection device 340 installed between a communication line and the control circuit 320, bonding parts 321, 331, 341, 351, and 361 formed on a metal panel 310 by bonding ground terminals of a signal surge protection device 340 installed between a signal line and the control circuit 320 and a sensor surge protection device 360 installed between a sensor line and the control circuit 320, and a ground bonding part 370 for connecting a ground wire to one side of the metal panel 310.

Although it is illustrated in FIG. 13 that the ground terminals of the control circuit 320 and the surge protection devices 330 to 360 are bonded to one metal panel 310, it is apparent that bonding parts may be formed at the closest portion of the panels of the metal box of the control panel 111 and the metal panel.

When the control circuit 320 and the ground terminals of the surge protection devices 330 to 360 are bonded to the metal panel of the metal box, the reactance between the control circuit 320 and the surge protection devices 330 to 360 and between the surge protection devices 330 to 360 themselves is remarkably reduced as compared with the conventional ground wires, substantially forming an equipotential even when a surge is introduced. This is because the bonding parts are not connected through a wire of a small cross-section but connected through a metal panel with a large area, and as such, a skin effect and accordingly the reactance are very low.

When there is an excellent earth ground, the ground wires extracted from the ground bonding parts 370 may be directly connected to the earth ground, but may be connected to a metal structure located in the vicinity when there is no ground or a defective ground in addition. Then, it is preferable that the metal structure contacts the earth or is located to face the earth, which is because the metal structure such as a metal pipe or a steel frame of a building is installed in the vicinity of the ground surface, acting as an excellent ground by itself.

Here, the metal structure includes a water pipe, a water main, a gas pipe, a hot water pipe, a water supply pipe, a water discharge pipe, a wire pipe, a frame, a frame of a machine, a frame of a building, a box of a facility, a grouting of an underground well, a casing, a lift head pipe, and a water supply pipe for a fire prevention system. Further, according to the present invention, the ground bonding part 370 may be formed in the control panel 310 and a ground wire may be connected between the ground bonding part 370 and the metal box of the control panel 111.

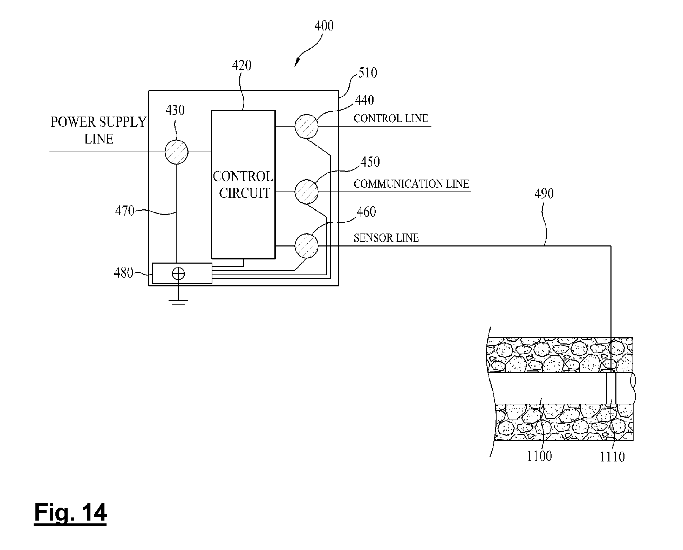

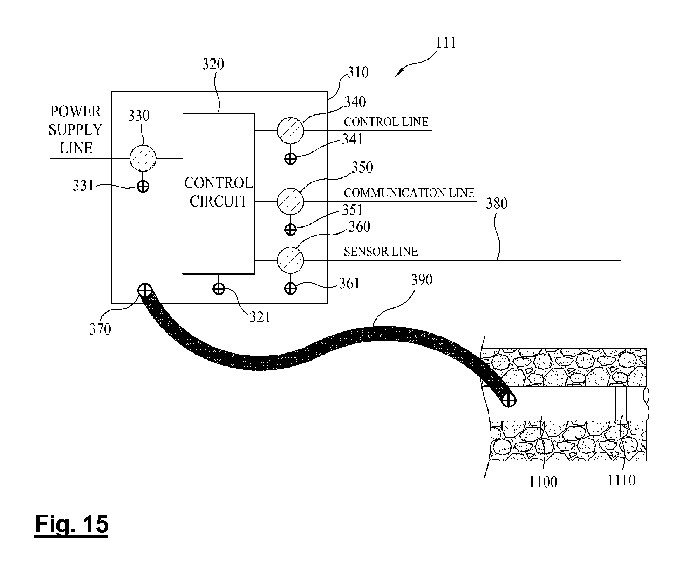

Hereinafter, an exemplary embodiment of the present invention will be described in detail with reference to FIG. 14 and FIG. 15.

FIG. 15 illustrates an equipotential bonding structure between a control panel and an underground well according to the present invention. Since the construction of the control panel and the underground well according to the present invention is identical with the conventional art, further description on this is omitted here. Hereinafter, an equipotential bonding between an underground well and a control panel and an equipotential bonding will be described.

### 1. Equipotential Bonding between Metal Pipe and Control panel

First, a equipotential bonding between a metal pipe and a control panel is achieved by bonding and connecting the ground terminal box 370 of the control panel 111 and the metal pipe 1100 using a ground wire.

The metal pipe 1100 may be buried underground and attached to the earth to be used as an excellent ground body. Accordingly, the ground terminals of electric devices installed on the metal pipe may be bonded to the metal pipe 1100 so that the metal pipe 1100 can be used as a ground body.

Accordingly, when the ground terminal box 370 of the control panel 111 and the metal pipe 1100 buried underground are bonded and connected to each other, since the control panel 111 is grounded to the metal pipe 1100, it is possible to prevent a potential difference from being generated between the ground terminal box 370 of the control panel 1 and the metal pipe 1100 as a ground body.

Here, it is preferable that a thick wire is used as the ground wire 390 connected the ground terminal box 370 of the control panel 111 and the metal pipe 1100 of the underground well and a distance between the ground terminal box 370 and the metal pipe 1100 is minimized, making it possible to minimize a reactance of the ground wire 390 and a potential difference.

### 2. Equipotential Bonding in Control panel

In an equipotential bonding structure in a control panel, ground terminals of a control circuit 320 installed in a control panel 111 including a metal box and surge protection devices 330 to 360 are bonded to a metal panel 310 to form bonding parts 321, 331, 341, 351, and 361 on the metal panel 310 and a ground terminal box 370 is installed at one side of the metal panel 310.

Although it is illustrated in FIG. 15 that ground terminals of the control circuit 320 and the surge protection devices 330 to 360 are bonded to one metal panel 310, it is apparent that bonding parts may be formed at the closest portion of the panels of the metal box of the control panel 111 and the metal panel.

When the ground terminals of the control circuit 320 and the surge protection devices 330 to 360 are bonded to the metal panel of the metal box, the reactance between the ground terminals of the control circuit 320 and the surge protection devices 330 to 360 is remarkably reduced as compared with the conventional ground wire, substantially achieving an equipotential even when a surge is introduced. Since the bonding parts are not connected through a wire of a small cross-section but connected through a metal panel of a large area, a skin effect and accordingly the reactance are very low.

As described above, the ground wires 380 extracted from the ground bonding parts 370 may be bonded and connected to the metal pipe 1100 and may be connected to an earth ground at the same time.

### Industrial Applicability

The present invention relates to a technology in that an equipotential between both facilities is implemented, when a surge current is generated through a line for connecting between the facilities separated from each other, thereby preventing a damage of the facility due to a lightning surge generated in one facility and grounding terminals of a power supply surge protection device and a communication surge protection device of the facility are connected to a metal box or a common ground terminal, so that the potential difference between all lines of the equipment is equal to the potential of the ground through the surge protectors, thereby a surge current may be interrupted to fundamentally prevent damage due to a lightning surge from occurring.

## Claims

1. A smart ground bonding method for facilities, wherein an electric wire is connected between a first facility and a second facility, a first surge protection device is connected between the first facility and the electric wire, a second surge protection device is connected between the electric wire and the second facility, and wherein ground terminals of the first and second surge protection devices are bonded to metal boxes of the first and second facilities and sides of the bonded metal boxes are connected to the ground.

2. The smart ground bonding method as claimed in claim 1, wherein only one of opposite ends of a shield line of the electric wire is grounded.

3. A smart ground bonding method for a facility to which a power supply line and a communication line are connected, wherein a power supply surge protection device is connected to the power supply line, a communication surge protection device is connected to the communication line, ground terminals of the power supply surge protection device and the communication surge protection device are connected to each other to form a common ground terminal, and the common ground terminal is connected to a conductive frame of the facility.

4. The smart ground bonding method as claimed in claim 3, wherein the conductive frame is a box for the facility, the ground terminals of the power supply surge protection device, the communication surge protection device and a ground terminal of the facility are bonded to the conductive frame of the facility, and a ground terminal is formed at one side of the conductive frame to be connected to an external ground.

5. The smart ground bonding method as claimed in claim 4, wherein the external ground is a metal structure located in the vicinity of the facility.

6. The smart ground bonding method as claimed in claim 5, wherein the metal structure includes at least one of a water pipe, a water main, a gas pipe, a hot water pipe, a water supply pipe, a water discharge pipe, a wire pipe, a frame, a frame of a machine, a frame of a building, a box of a facility, a grouting of an underground well, a casing, a lift head pipe, and a water supply pipe for a fire prevention system.

7. A smart ground bonding method for a facility to which a metal structure is provided and a power supply line and a communication line are connected, wherein a power supply surge protection device is connected to the power supply line, a communication surge protection device is connected to the communication line, a common ground is formed on the metal structure, and grounding terminals of the power supply surge protection device and the communication surge protection device are connected to the common ground.

8. A smart ground bonding method for grounding an underground well and a control panel installed adjacent to the underground well, wherein a ground terminal box of the control panel and a metal grouting pipe of the underground well are bonded and connected to each other by using a ground wire.

9. The smart ground bonding method as claimed in claim 8, wherein the ground terminal box is installed at a location closest to the metal grouting pipe inside the control panel.

10. The smart ground bonding method as claimed in claim 8, wherein a ground terminal of at least one surge protection device installed in the control panel is bonded to the adjacent metal panel.

11. The smart ground bonding method as claimed in claim 10, wherein the underground well is provided with a metal box, the metal panel is a metal panel where a control circuit is installed, and a ground terminal of the control circuit is bonded to the metal panel.

12. A smart ground bonding method for a control panel, wherein a ground terminal of at least one surge protection device installed in a control panel having a metal box is bonded to an adjacent metal panel and one side of the bonded metal panel is connected to the ground.

13. The smart ground bonding method as claimed in claim 12, wherein the metal panel is a metal panel, on which a control circuit is installed, and a ground terminal of the control circuit is bonded to the metal panel.

14. A smart ground bonding method for a control panel for remotely monitoring and controlling a metal pipe line, wherein a metal pipe for ground and a ground terminal box of the control panel remotely connected thereto are bonded and connected to each other by using a ground wire.

15. The smart ground bonding method as claimed in claim 14, wherein a ground terminal of an electric device installed on the metal pipe line is bonded and connected to the metal pipe.

16. The smart ground bonding method as claimed in claim 14, wherein a ground terminal of at least one surge protection device installed in the control panel is bonded to the adjacent metal panel.

17. The smart ground bonding method as claimed in claim 16, wherein the metal panel is a metal panel, on which a control circuit is installed, and a ground terminal of the control circuit is bonded to the metal panel.
